# EUROPÄISCHE PATENTANMELDUNG

(11) **EP 1 134 741 A2**
(43) Veröffentlichungstag der Anmeldung: **19.09.2001**
(21) Anmeldenummer: 01101835.5
(22) Anmeldetag: 26.01.2001
(51) Int. Cl.: G11B 33/04

(54) **Kompaktspeicher für Datenträger**

(30) Priorität: 08.03.2000 DE 10011175
(71) Anmelder: Heitmann, Jürgen, 32130 Enger (DE)
(72) Erfinder: Diestelhorst, Heinz-Ulrich, 32257 Bünde (DE); Gloger, Klaus Willy, 32257 Bünde (DE)
(74) Vertreter: Manitz, Finsterwald & Partner

(57) **Zusammenfassung**

Es wird ein Kompaktspeicher zur temporären Aufnahme von Datenträgern, insbesondere zur Aufnahme von scheibenförmigen Datenträgern beschrieben, der aus einem Flachgehäuse mit zwei beabstandet gegenüberliegenden Deckwänden und dazwischen ausgebildetem Aufnahmeraum besteht und bei dem in wenigstens einer der Deckwände eine Ausnehmung vorgesehen ist, die einen begrenzt manuellen Direktausschub des Datenträgers ermöglicht.

## Beschreibung

Die Erfindung betrifft einen Kompaktspeicher zur temporären Aufnahme von Datenträgern, insbesondere zur Aufnahme von scheibenförmigen Datenträgern,
bestehend aus einem Flachgehäuse mit einem den Abmessungen des jeweiligen Datenträgers zumindest im wesentlichen angepaßten Aufnahmeraum, der durch zwei zueinander parallele, über randseitige Distanzorgane miteinander verbundene Deckwände begrenzt ist und an einer Schmalseite eine schlitzförmige Öffnung zur Einführung und zur Entnahme des Datenträgers aufweist.

Ein Kompaktspeicher dieser Art ist aus der DE 197 28 705 A1 bekannt. Kompaktspeicher dieser Art weisen gegenüber den sich zur Zeit überwiegend in Gebrauch befindenden Aufnahmebehältnissen für Kompaktdisks sowohl in der Handhabung als auch hinsichtlich des Raumbedarfs, des Schutzes vor Beschädigungen sowie des Fertigungs- und Montageaufwands erhebliche Vorteile auf. Aufgrund der schwebenden Lagerung des jeweiligen Datenträgers, der bevorzugt nur randseitig erfaßt wird, ergibt sich ein optimaler Schutz der empfindlichen Datenträgerflächen, wobei dieser Vorteil gleichzeitig mit dem Vorteil einer einfachen Handhabung gepaart ist, denn der Datenträger kann aus dem Speicher durch einfache Betätigung des vorgesehenen Auswurfmechanismus entnommen werden, der durch einen Schwenkhebel realisiert ist.

Aufgabe der vorliegenden Erfindung ist es, unter Beibehaltung aller Vorteile der bekannten Anordnung eine noch weitergehende Vereinfachung des Aufbaus und der Handhabung des Kompaktspeichers zu erreichen und damit eine noch wirtschaftlichere Fertigung zu ermöglichen.

Gelöst wird diese Aufgabe ausgehend von dem Kompaktspeicher der eingangs angegebenen Art gemäß der vorliegenden Erfindung dadurch, daß in wenigstens einer der Deckwände eine Ausnehmung vorgesehen ist, die im Bereich zwischen der schlitzförmigen Öffnung und dem rückseitigen Ende des Aufnahmeraums gelegen ist und einen begrenzten manuellen Direktausschub des Datenträgers ermöglicht.

Das Einführen des jeweiligen Datenträgers in den Kompaktspeicher erfolgt dabei analog zu dem als bekannt vorausgesetzten Kompaktspeicher über einen dem Datenträger angepaßten Einführungsschlitz des Flachgehäuses. Die Aufnahme im Flachgehäuse ist durch geeignete Halte- und/oder Führungsmittel so gestaltet, daß der Datenträger im Aufnahmeraum gehalten wird und nicht von alleine aufgrund von Schwerkraftwirkung aus dem Aufnahmeraum austreten kann. Durch die zumindest in einer Deckwand vorgesehene Ausnehmung wird es ermöglicht, den Datenträger manuell so weit aus dem Aufnahmeraum zu schieben, daß der aus dem Flachgehäuse austretende Teil des Datenträgers erfaßt und damit vollständig aus dem Kompaktspeicher entnommen werden kann. Damit entfällt jeglicher Auswurfmechanismus, was zu einer ganz wesentlichen Vereinfachung des Kompaktspeichers führt.

Bevorzugt ist die wenigstens einseitig vorgesehene Ausnehmung nach Art eines Langlochs gestaltet, das senkrecht zum Einführungsschlitz verläuft, wobei die Breite dieser Ausnehmung so gewählt ist, daß die Verschiebung des Datenträgers mittels eines Fingers oder mittels des Daumens problemlos möglich ist.

Nach einer bevorzugten Ausgestaltung der Erfindung erstreckt sich die Ausnehmung über die Mitte des Aufnahmeraums hinaus, so daß die im Datenträger vorgesehene zentrale Öffnung im manuellen Erfassungsbereich gelegen ist. Auf diese Weise kann der im Regelfall zum Ausschub verwendete Daumen in diese zentrale Öffnung zumindest teilweise eingreifen, was die Ausschubbewegung erleichtert.

Der Abstand zwischen dem auf der Seite des Einführschlitzes gelegenen Ende der Ausnehmung und dem Außenrand des Flachgehäuses wird vorteilhafterweise kleiner gewählt als der Radius des zentralen datenfreien Bereichs des scheibenförmigen Datenträgers. Auf diese Weise steht am Ende der durch die Ausnehmung begrenzten Ausschubbewegung der jeweilige Datenträger so weit aus dem Flachgehäuse vor, daß der Datenträger in seinem aufzeichnungsfreien Mittelbereich ergriffen und vollständig aus dem Flachgehäuse entnommen werden kann.

Für Archivierungszwecke und für allgemeine Zwecke der Aufbewahrung von mit Datenträgern bestückten Kompaktspeichern ist es von großem Vorteil, wenn das Flachgehäuse der schlitzförmigen Aufnahmeöffnung gegenüberliegend und an den Aufnahmeraum angrenzend einen Kupplungsbereich aufweist, der kompatibel zum herkömmlichen Archivierungs- und/oder Fixierungssystemen ausgebildet ist. Beispielsweise können in diesem Bereich Lochpaare vorgesehen sein, so daß der Kompaktspeicher in entsprechenden Ordnern und Registraturen aufgenommen werden kann.

Bevorzugt ist das Flachgehäuse so gestaltet bzw. mit Führungselementen versehen, daß der Datenträger im Flachgehäuse schwebend gehalten, d.h. nur an seinen Randbereichen erfaßt ist und zu den beidseitigen Deckwänden einen Abstand aufweist. Dabei sind die Halte- und/oder Führungsmittel so gestaltet, daß der Datenträger im Aufnahmeraum gegen ein Herausfallen gesichert ist und nur über eine gezielt durchgeführte Verschiebebewegung unter Nutzung der in zumindest einer Deckseite vorgesehenen Ausnehmung aus dem Speicher entfernbar ist.

Bevorzugt sind Führungs- und/oder Halteelemente randseitig und einander diametral gegenüberliegend vorgesehen, welche den Datenträger nach Art einer Schnapp-Halterung aufnehmen.

Weitere vorteilhafte Ausgestaltungen und Merkmale der Erfindung sind in den Unteransprüchen angegeben und werden im Zusammenhang mit der nachfolgenden Beschreibung eines Ausführungsbeispiels unter Bezugnahme auf die Zeichnung näher erläutert; in der Zeichnung zeigt:
- Fig. 1: den Kompaktspeicher nach der Erfindung mit einem zwischengespeicherten Datenträger, und
- Fig. 2: den Kompaktspeicher nach Fig. 1 in einer Funktionsposition, bei der der Datenträger so weit aus seinem Aufnahmeraum geschoben ist, daß er von außen ergriffen und vollständig aus dem Speicher entfernt werden kann.

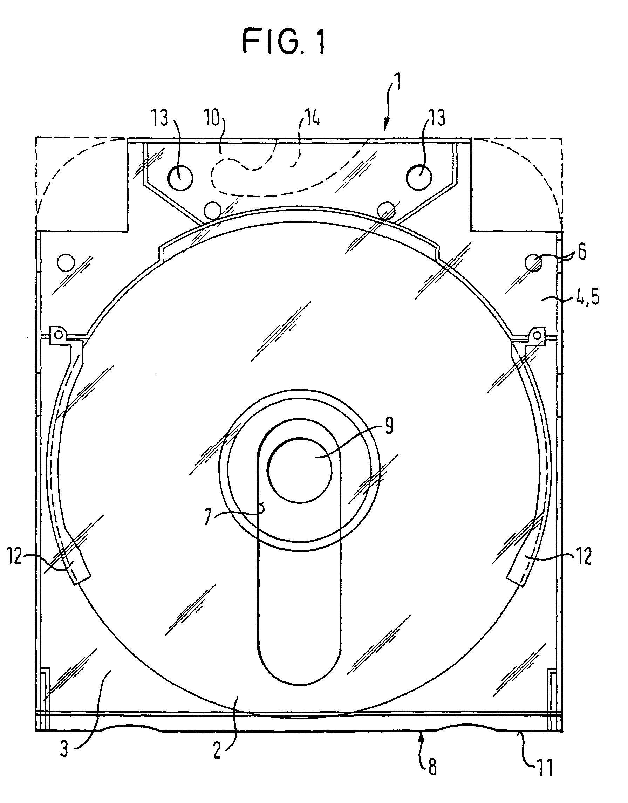

Fig. 1 zeigt ein Ausführungsbeispiel eines erfindungsgemäßen Kompaktspeichers mit einem Flachgehäuse 1 mit einer oberen Deckwand 4 und einer unteren Deckwand 5, die über Distanzorgane 6 zur Ausbildung eines Aufnahmeraums 3 für einen Datenträger miteinander verbunden sind.

Randseitig ist das Flachgehäuse 1 dreiseitig geschlossen ausgebildet, wobei die schmalen Flachseiten gleichzeitig Distanzorgane 6 bilden. Bevorzugt ist das Flachgehäuse 1 aus einem durchsichtigen Kunststoffmaterial ausgebildet, aber es kann zur Ausgestaltung des Flachspeichers grundsätzlich auch jedes andere geeignete Material, z.B. Karton, verwendet werden.

Der Aufnahmeraum 3 ist der Form des jeweils aufzunehmenden Datenträgers 2 angepaßt, so daß der Datenträger über die an der Vorderseite vorgesehene Schlitzöffnung 8 in den Aufnahmeraum 3 eingeschoben werden kann und die Einschubbewegung durch einen rückseitigen Anschlag begrenzt wird.

Die Schlitzöffnung 8 ist bevorzugt so gestaltet, daß die Schlitzhöhe von der Mitte zu den beiden Rändern hin abnimmt und demgemäß der jeweilige Datenträger 2 mit dem Flachgehäuse nur randseitig in Berührung kommt. Außerdem kann der Bereich der Schlitzöffnung 8 so ausgestaltet sein, daß sich für die Einschub- und insbesondere auch die Ausschubbewegung eine gewisse Bremswirkung für den Datenträger 2 ergibt.

Die Seitenbereiche zumindest des Aufnahmeraums 3 sind als Führungen für den Datenträgerrand ausgebildet, und diese Führungen sind so gestaltet, daß sie lediglich den äußersten, datenfreien Rand des Datenträgers 2 ergreifen und den Datenträger 2 im Aufnahmeraum 3 schwebend haltern, d.h. in der Weise haltern, daß insbesondere seine zur Aufzeichnung von Daten bestimmte Fläche nicht mit einer Deckwand 4 oder 5 in Kontakt kommt.

Im Aufnahmeraum oder im Bereich des Aufnahmeraums 3 sind ferner Mittel vorgesehen, die den Datenträger 2 nach Art einer Schnapp-Halterung erfassen und halten, so daß der Datenträger den Aufnahmeraum 3 nur bei gezielter Betätigung, jedoch nicht allein durch Schwerkraftwirkung oder Handhabung des Kompaktspeichers verlassen kann.

Nach einer bevorzugten Ausgestaltung der Erfindung sind die Führungsmittel für den Datenträger und die Schnapp-Halterung funktionell zusammengefaßt und bestehen aus zumindest einem teilringförmigen, der Außenkontur des Datenträgers 2 angepaßten Halte- und Führungselement 12, das am Flachgehäuse gehalten, gegebenenfalls angespritzt und dabei elastisch ausgebildet ist, so daß der Datenträger auf einem Teilbereich seines Umfangs von diesem elastischen Element umfaßt und gehalten wird. Beim Einschieben des Datenträgers und beim Herausschieben des Datenträger 2 aus dem Aufnahmeraum 3 wird das elastisch ausgebildete Halteelement 2 aufgeweitet bzw. verformt und gibt den Datenträger nach einer vorgebbaren Verschiebestrecke frei.

Bevorzugt bestehen diese Führungs- und/oder Halteelemente 12 aus einander diametral gegenüberliegenden Elementen und werden von bogenförmigen, elastischen Teilen gebildet, die jeweils mit einer Aufnahmerille für den Datenträgerrand versehen sind.

Der der Schlitzöffnung 8 gegenüberliegende Endbereich des Flachgehäuses 1 ist als mechanischer Kupplungsbereich 10 ausgebildet, in dem z.B. Lochpaare 13 oder Kuppelausnehmungen 14 vorgesehen sind, die es ermöglichen, den erfindungsgemäßen Kompaktspeicher in Verbindung mit herkömmlichen Archivierungs- und Halterungssystemen einzusetzen. Die rückseitigen Eckbereiche des Kompaktspeichers können in der in Fig. 1 gezeigten Weise ausgenommen sein, so daß der Kupplungsbereich schmaler ist als der sich daran anschließende Aufnahmebereich für den Datenträger 2. Die Eckbereiche können ansonsten aber auch in beliebiger Form gestaltet werden, wie dies strichliert angedeutet ist.

Das Flachgehäuse 1 besteht bevorzugt aus einem Kunststoff-Formteil, wobei die jeweils vorgesehenen Funktionselemente in Form von Anschlägen, Distanzorganen, Verbindungselementen, Führungs- und Halteelementen bevorzugt unmittelbar an die beiden Deckwände 3, 4 angeformt sind. Über rückseitig ausgebildete Filmscharniere können die Deckwände in eine zueinander parallele Lage unter Ausbildung des Flachgehäuses 1 gebracht werden, und in dieser Parallellage sind die Deckwände 3, 4 miteinander verrastbar. Diese Ausgestaltung führt zu einer Minimierung der Fertigungskosten.

In zumindest einer der Deckwände 4, 5 ist eine Langloch-Ausnehmung 7 vorgesehen, die sich bevorzugt von einem Bereich unmittelbar benachbart zur Schlitzöffnung 8 bis über die Mitte des Aufnahmeraums 3 hinaus erstreckt. Die Größe dieser Ausnehmung 7 bzw. dieser Ausnehmungen 7 ist so gewählt, daß ein sich im Aufnahmeraum befindender Datenträger mit dem Daumen oder dem Finger einer Bedienungsperson erfaßt und verschoben werden kann. Beispielsweise beträgt die Breite dieser Ausnehmung 7 etwa 20 mm.

Durch die erwähnte Dimensionierung der Ausnehmung 7 kann auch sichergestellt werden, daß die zentrale Öffnung 9 eines Datenträgers 2 bei sich im Aufnahmeraum 3 befindendem Datenträger 2 im Bereich der Ausnehmung 7 befindet.

Bevorzugt wird der jeweilige Datenträger so in den Aufnahmeraum 3 eingeführt, daß die nicht zur Datenspeicherung verwendete Seite des Datenträgers benachbart derjenigen Deckwand 4 gelegen ist, die mit der Ausnehmung 7 versehen ist.

In der Darstellung nach Fig. 1 befindet sich der Datenträger 2 in Speicherposition, d.h. er ist voll im Aufnahmeraum aufgenommen und in diesem Aufnahmeraum bevorzugt schwebend gehaltert. Durch diese Halterung wird sichergestellt, daß der Datenträger 2 eine definierte Position im Flachgehäuse einnimmt und den Aufnahmeraum 3 weder durch übliche Schwerkrafteinwirkung noch durch übliche Handhabung unbeabsichtigt verlassen kann.

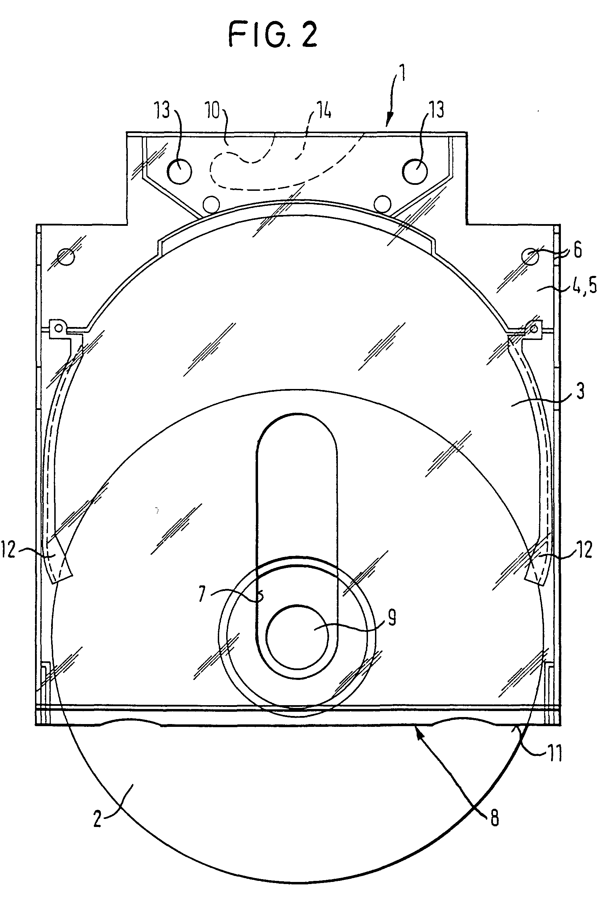

Fig. 2, die in ihrer grundsätzlichen Darstellung der Fig. 1 entspricht, zeigt den Fall der Entnahme des Datenträgers 2 aus dem Aufnahmeraum 3.

Dazu wird in üblicher Weise das Flachgehäuse in seinem rückseitigen Bereich mit einer Hand gehalten, während die andere Hand mittels des Daumens oder eines Fingers den Datenträger 2 über die Ausnehmung 7 ergreift und in Richtung der Schlitzöffnung 8 verschiebt. Dabei verläßt der Datenträger 2 die im Flachgehäuse vorgesehene Schnapp-Halterung und gelangt in die in Fig. 2 gezeigte Position, in der der Datenträger 2 so weit aus dem Flachgehäuse ragt, daß er manuell ergriffen und vollständig aus dem Flachgehäuse entnommen werden kann.

Die Ausnehmung 7 wird bevorzugt so gestaltet und so nahe an den Rand 11 des Flachgehäuses 2 herangeführt, daß nach dem Ende der Verschiebebewegung bereits der datenfreie Teil des Datenträgers, d.h. der mittig gelegene Bereich des Datenträgers zugänglich ist und erfaßt werden kann. Es ist demgemäß nicht notwendig, den datentragenden Bereich des Datenträgers zu berühren.

Wenn in beiden Deckwänden 4, 5 einander entsprechende Ausnehmungen 7 vorgesehen sind, daß läuft der Entnahmevorgang eines Datenträgers praktisch in gleicher Weise ab, man kann aber in diesem Falle den Datenträger im Bereich seiner zentralen Öffnung 9 auf der einen Seite mit dem Daumen und auf der anderen Seite mit einem weiteren Finger erfassen und von vorne her in die in Fig. 2 gezeigte Position bzw. durch geeignete Gestaltung der Ausnehmung 7 in eine Position bringen, in der der datenfreie mittlere Bereich am Ende der Verschiebebewegung zumindest zum Teil deutlich außerhalb des Flachgehäuses 1 gelegen ist.

### Bezugszeichenliste

- 1: Flachgehäuse
- 2: Datenträger
- 3: Aufnahmeraum
- 4: obere Deckwand
- 5: untere Deckwand
- 6: Distanzorgan
- 7: Ausnehmung
- 8: Schlitzöffnung
- 9: zentrale Öffnung
- 10: Kupplungsbereich
- 11: Außenrand
- 12: Halteelement
- 13: Loch
- 14: Kuppelausnehmung

## Patentansprüche

1. Kompaktspeicher zur temporären Aufnahme von Datenträgern, insbesondere zur Aufnahme von scheibenförmigen Datenträgern, bestehend aus einem Flachgehäuse (1) mit einem den Abmessungen des jeweiligen Datenträgers (2) zumindest im wesentlichen angepaßten Aufnahmeraum (3), der durch zwei zueinander parallele, über randseitige Distanzorgane (6) miteinander verbundene Deckwände (4, 5) begrenzt ist und an einer Schmalseite eine schlitzförmige Öffnung (8) zur Einführung und zur Entnahme des Datenträgers (2) aufweist,
**dadurch gekennzeichnet**,
daß in wenigstens einer der Deckwände (4, 5) eine Ausnehmung (7) vorgesehen ist, die im Bereich zwischen der schlitzförmigen Öffnung (8) und dem rückseitigen Ende des Aufnahmeraums (3) gelegen ist und einen begrenzten manuellen Direktausschub des Datenträgers (2) ermöglicht.

2. Kompaktspeicher nach Anspruch 1,
**dadurch gekennzeichnet**,
daß die Ausnehmung (7) nach Art eines Langlochs gestaltet ist, das zumindest im wesentlichen senkrecht zur schlitzförmigen Einführ- und Entnahmeöffnung (8) verläuft.

3. Kompaktspeicher nach Anspruch 1 oder 2,
**dadurch gekennzeichnet**,
daß die Breite der Ausnehmung (7) so gewählt ist, daß eine Mitnahme des Datenträgers (2) durch eine unter Andruck erfolgende Finger- bzw. Daumenverschiebung längs der Ausnehmung (7) gewährleistet ist.

4. Kompaktspeicher nach einem der vorhergehenden Ansprüche,
**dadurch gekennzeichnet**,
daß die Ausnehmung (7) sich über die Mitte des Aufnahmeraums (3) hinaus erstreckt und damit eine im Datenträger (2) vorgesehene zentrale Öffnung (9) im manuellen Erfassungsbereich gelegen ist.

5. Kompaktspeicher nach einem der vorhergehenden Ansprüche,
**dadurch gekennzeichnet**,
daß in beiden Deckwänden (4, 5) einander zumindest im wesentlichen entsprechende, gegenseitig ausgerichtete Ausnehmungen (7) vorgesehen sind.

6. Kompaktspeicher nach einem der vorhergehenden Ansprüche,
**dadurch gekennzeichnet**,
daß der Abstand zwischen dem auf der Seite des Einführschlitzes (8) gelegene Ende der Ausnehmung (7) und dem Außenrand (11) des Flachgehäuses (1) kleiner ist als der Radius des zentralen datenfreien Bereichs eines scheibenförmigen Datenträgers (2).

7. Kompaktspeicher nach einem der vorhergehenden Ansprüche,
**dadurch gekennzeichnet**,
daß das Flachgehäuse (1) der schlitzförmigen Aufnahmeöffnung (8) gegenüberliegend und an den Aufnahmeraum (3) anschließend einen Kupplungsbereich (10) aufweist, der kompatibel zu herkömmlichen Archivierungs- und/oder Fixierungssystemen ausgebildet ist.

8. Kompaktspeicher nach Anspruch 7,
**dadurch gekennzeichnet**,
daß der Kopplungsbereich (10) mit einem Lochmuster und insbesondere mit Norm-Lochpaaren für Archivierungssysteme versehen ist.

9. Kompaktspeicher nach Anspruch 7 oder 8,
**dadurch gekennzeichnet**,
daß der Kopplungsbereich (10) im Vergleich zu der im wesentlichen durch den Durchmesser des jeweiligen Datenträgers (2) vorgegebenen Breite des Flachgehäuses (1) schmaler ausgebildet ist.

10. Kompaktspeicher nach einem der vorhergehenden Ansprüche,
**dadurch gekennzeichnet**,
daß zur Halterung des Datenträgers (2) im Aufnahmeraum (3) mittig und/oder seitlich, insbesondere teilringförmig ausgebildete und vorzugsweise elastische Führungs- und/ oder Halteelemente (12) vorgesehen sind, die den Datenträger (2) bezüglich der Deckwände (4, 5) beabstandet halten.

11. Kompaktspeicher nach Anspruch 10,
**dadurch gekennzeichnet**,
daß die Führungs- und/oder Halteelemente (12) den Datenträger (2) nach Art einer Schnapp-Halterung aufnehmen.

12. Kompaktspeicher nach Anspruch 11,
**dadurch gekennzeichnet**,
daß die Führungs- und/oder Halteelemente (12) einander diametral gegenüberliegen und aus bogenförmigen, elastischen Elementen bestehen und jeweils mit einer Aufnahmerille für den Datenträgerrand versehen sind.

13. Kompaktspeicher nach einem der vorhergehenden Ansprüche,
**dadurch gekennzeichnet**,
daß das Flachgehäuse (1) aus einem Kunststoff-Formteil besteht, wobei Funktionselemente wie Anschläge, Distanzorgane, Steck-Verbindungselemente, Führungs- und Halteelemente unmittelbar an die beiden Deckwände (3, 4) angeformt und die beiden über Filmscharniere verbundene Deckwände (3, 4) unter Ausbildung des Flachgehäuses (1) durch Faltung gegenseitig verrastbar sind.
